(19) Europäisches Patentamt
European Patent Office
Office européen des brevets

(11) **EP 2 135 420 B1**

(12) **EUROPEAN PATENT SPECIFICATION**

(45) Date of publication and mention
of the grant of the patent:
**11.12.2019 Bulletin 2019/50**

(51) Int Cl.:
*H04L 29/06* (2006.01)     *H04L 9/00* (2006.01)
*H04L 9/08* (2006.01)

(21) Application number: **08736830.4**

(22) Date of filing: **11.04.2008**

(86) International application number:
**PCT/FI2008/050181**

(87) International publication number:
**WO 2008/125731 (23.10.2008 Gazette 2008/43)**

(54) **A HANDSHAKE PROCEDURE**

HANDSHAKE-PROZEDUR

PROCÉDURE D'ENTRÉE EN COMMUNICATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.04.2007 US 783856**

(43) Date of publication of application:
**23.12.2009 Bulletin 2009/52**

(73) Proprietor: **Nokia Technologies Oy
02610 Espoo (FI)**

(72) Inventor: **NYBERG, Kaisa
FI-00100 Helsinki (FI)**

(74) Representative: **Browne, Robin Forsythe et al
Hepworth Browne
15 St Paul's Street
Leeds LS1 2JG (GB)**

(56) References cited:
US-A1- 2006 126 847     US-A1- 2006 126 847
US-B1- 6 363 154     US-B1- 6 363 154
US-B1- 6 882 730     US-B1- 7 096 356
US-B1- 7 096 356

• **ANONYMOUS ED - ANONYMOUS: "International
Standard - Information technology
Telecommunications and information exchange
between systems Local and metropolitan area
networks Specific requirements Part 11: Wireless
LAN Medium Access Control (MAC) and Physical
Layer (PHY) specifications AMENDMENT 6:
Medium Access Control (MAC) Se", 23 July 2004
(2004-07-23), IEEE STANDARD; [IEEE
STANDARD], IEEE, PISCATAWAY, NJ, USA,
PAGE(S) C1 - 178, XP017601578, ISBN:
978-0-7381-4073-5 * Section 5.9.1 to 8.7.2.4 ***
• **Alec Yasinsac: "A Family of Protocols for Group
Key Generation in Ad Hoc Networks", , 1 January
2002 (2002-01-01), XP055368000, Retrieved from
the Internet:
URL:http://www.cs.fsu.edu/~yasinsac/Papers
/YTCC02.pdf [retrieved on 2017-04-27]**
• **YONGDAE K. ET AL.: 'Group Key Agreement
Efficient in Communication' IEEE
TRANSACTIONS ON COMPUTERS, IEEE
SERVICE CENTER, LOS ALAMITOS, CA, USA vol.
53, no. 7, 01 July 2004, pages 905 - 921,
XP011116173**

**Description**

**FIELD OF THE INVENTION**

The present invention relates to data management systems. Particularly, the invention relates to novel methods and devices for establishing by a handshake procedure a group temporal key for securing group communication.

**BACKGROUND OF THE INVENTION**

In data communication, a term handshaking can be determined e.g. as referring to a sequence of events governed by hardware or software, requiring mutual agreement of the state of the operational modes prior to information exchange. The handshaking may also be used to verify that the other party is what it claims to be.

Various kinds of handshaking procedures are known in both wired and wireless environments. A typical way to implement a derivation of a session key for securing further communication is to use pairwise handshake procedures. The pairwise handshake procedures are executed between two parties. If group communication is desirable, each group member has to execute pairwise handshake procedures separately with every other group member, thus resulting a common pairwise temporal key between the two parties performing the handshake.

The established pairwise temporal keys may be used to distribute a session key, that is, a group temporal key, to other members in the same group. The session key establishment of group communication is significantly cumbersome as the number of members or member devices in the group grows. The session keys may be sender-specific, and the number of session keys for a group may be equal to the number of members in the group. For example, if a group consists of eight members, each member has to perform a pairwise handshaking procedure with the remaining seven group members. After that, each member has to distribute its session key to each other member in the group by using the pairwise temporal keys.

Based on the above there is an obvious need to simplify the usage and establishment of the session keys.

**SUMMARY OF THE INVENTION**

In first and second aspects of the invention, there are provided methods in accordance respectively with claims 1 and 9. In further aspects o the invention there are provided devices in accordance respectively with claims 10 and 11. In a further aspect of the invention there is provide a computer program in accordance with claim 13.

With the totality of the present disclosure, there is disclosed a method for establishing, by a handshake procedure, a group temporal key for group communication. The method comprises providing a handshake initiator with a shared group key, a group key identifier and a group identifier, the group identifier identifying the group members, wherein the group comprises at least three members; generating a group temporal key identifier; generating an initiator random number; creating an initiating message comprising the group identifier, the group key identifier, the group temporal key identifier, and the initiator random number; sending the initiating message to other group members; receiving a response message from at least one group member, the response message comprising a random number of the sender of the response message; determining, whether response messages have been received from a predetermined set of group members; and calculating the group temporal key with at least a key derivation function, the shared group key identified by the group key identifier, and at least one random number from a set of the initiator random number and the received random numbers, when a response message have been received from the predetermined set of group members.

Specific embodiments may further comprise one of the following separately or in combination with at least one other embodiment.

In one embodiment, when determining that response messages have not been received from the predetermined set of group members, the method further comprises: reinitiating the handshake procedure, and aborting the handshake procedure.

In one embodiment, in the group temporal key calculation random numbers of all the group members belonging to the predetermined set of group members are used.

In one embodiment, the predetermined set of group members comprises all the group members.

In one embodiment, the predetermined set of group members comprises a subgroup of all the group members.

In one embodiment, the handshake procedure is reinitiated, when detecting a group member from which a response message was not received.

In one embodiment, sending a message comprising random numbers used in calculating the group temporal key to the group.

In one embodiment, sending a message comprising random numbers used in calculating the group temporal key and sender information of the received random numbers to the group.

In one embodiment, sending a message comprising random numbers used in calculating the group temporal key, the group key identifier and the group identifier to at least one group member from which a response message was not received.

In one embodiment, indicating in the message whether the order of the initiator random number and the random numbers used in calculating the group temporal key is significant.

In one embodiment, the group key identifier and the group identifier are comprised in a single identifier.

In one embodiment, the handshake procedure is performed in the data link layer.

In one embodiment, the handshake procedure is performed above the data link layer, and the method further comprises: transporting the calculated group temporal key to the data link layer.

There is also disclosed a method for establishing, by a handshake procedure, a group temporal key for group communication, The method comprises: providing a handshake responder with a shared group key, a group key identifier and a group identifier, the group identifier identifying the group members, wherein the group comprises at least three members; receiving an initiating message from a handshake initiator, the initiating message comprising the group identifier, a group temporal key identifier, and an initiator random number; receiving a response message from at least one group member, the message comprising a random number of the sender of the message; determining, whether response messages have been received from a predetermined set of group members; and calculating the group temporal key with at least a key derivation function, the shared group key identified by the group key identifier, and at least one random number from a set of the initiator random number and the received random numbers in the at least one received response message, when a response message has been received from the predetermined set of group members.

This may further comprise one of the following embodiments separately or in combination with at least one other embodiment.

In one embodiment, generating a responder random number; creating a response message that comprises at least the responder random number; and sending the response message to other members of the group.

In one embodiment, when determining that response messages have not been received from the predetermined set of group members, the method further comprises: aborting the handshake procedure.

In one embodiment, in the group temporal key calculation random numbers of all the group members belonging to the predetermined set of group members are used.

In one embodiment, the predetermined set of group members comprises all the group members.

In one embodiment, the predetermined set of group members comprises a subgroup of all the group members.

In one embodiment, receiving, from the handshake initiator, a key calculation message comprising random numbers used by the handshake initiator in calculating the group temporal key; checking, whether the handshake responder has received the same random numbers as comprised in the key message; using in calculating the group temporal key the random numbers comprised in the key message, when the result of the checking is affirmative; and aborting the handshake procedure, when the result of the checking is negative.

In one embodiment, receiving, from the handshake initiator, a key calculation message comprising random numbers used in calculating the group temporal key and corresponding sender information of the random numbers; checking, whether the handshake responder has received the same random numbers from the same senders as comprised in the key message; using in calculating the group temporal key the random numbers comprised in the key message, when the result of the checking is affirmative; and aborting the handshake procedure, when the result of the checking is negative.

In one embodiment, the group key identifier and the group identifier are comprised in a single identifier.

In one embodiment, the handshake procedure is performed in the data link layer.

In one embodiment, the handshake procedure is performed above the data link layer, and wherein there is also the step of transporting the calculated group temporal key to the data link layer.

There is provided a method for establishing, by a handshake procedure, a group temporal key for group communication. The method comprises: providing a group member with a shared group key, a group key identifier and a group identifier, the group identifier identifying the group members, wherein the group comprises at least three members; receiving, from a handshake initiator, a key calculation message comprising a group temporal key identifier, a group identifier and random numbers of those group members which were used in calculating the group temporal key; and calculating the group temporal key with at least a key derivation function, the shared group key identified by the group key identifier, the group identifier, and the received random numbers.

In one embodiment, this includes indicating in the key calculation message whether the order of the random numbers in calculating the group temporal key is significant.

There is provided a device for establishing, by a handshake procedure, a group temporal key for group communication. The device comprises a transceiver configured to communicate with other group members over a wired or wireless connection; and a handshake unit comprising a shared group key, a group key identifier and a group identifier, the group identifier identifying the group members, wherein the group comprises at least three members; wherein the handshake unit is configured to: generate a group temporal key identifier; generate an initiator random number; create an initiating message comprising the group identifier, the group key identifier, the group temporal key identifier, and the initiator random number; send the initiating message to other group members; receive a response message from at least one group member, the response message comprising a random number of the sender of the response message; determine, whether response messages have been received from a predetermined set of group members; and calculate the group temporal key with at least a key derivation function, the shared group key identified by the group key identifier, and at least one random number from a set of the initiator random number and the received random numbers, when a response message have been received from the predetermined set of group members.

As is disclosed herein, there is also provided a device for establishing, by a handshake procedure, a group temporal key for group communication. The device comprises a transceiver configured to communicate with other group members over a wired or wireless connection; and a handshake unit comprising a shared group key, a group key identifier and a group identifier, the group identifier identifying the group members, wherein the group comprises at least three members; wherein the handshake unit is configured to: receive an initiating message from a handshake initiator, the initiating message comprising the group identifier, a group temporal key identifier, and an initiator random number; receive a response message from at least one group member, the message comprising a random number of the sender of the message; determine, whether response messages have been received from a predetermined set of group members; and calculate the group temporal key with at least a key derivation function, the shared group key identified by the group key identifier, and at least one random number from a set of the initiator random number and the received random numbers in the at least one received response message, when a response message has been received from the predetermined set of group members

There is further disclosed a device for establishing, by a handshake procedure, a group temporal key for group communication. The device comprises a transceiver configured to communicate with other group members over a wired or wireless connection; and a handshake unit comprising a shared group key, a group key identifier and a group identifier, the group identifier identifying the group members, wherein the group comprises at least three members; wherein the handshake unit is configured to: receive, from a handshake initiator, a key calculation message comprising a group temporal key identifier, a group identifier and random numbers of those group members which were used in calculating the group temporal key; and calculate the group temporal key with at least a key derivation function, the shared group key identified by the group key identifier, the group identifier, and the received random numbers.

With this disclosure, there is also provided a computer program for establishing, by a handshake procedure, a group temporal key for group communication, the group comprising at least three members, embodied on a computer-readable medium. The computer program is configured to perform the following when executed on a data-processing device: generating a group temporal key identifier; generating an initiator random number; creating an initiating message comprising a group identifier, a group key identifier, a group temporal key identifier, and the initiator random number; sending the initiating message to other group members; receiving a response message from at least one group member, the response message comprising a random number of the sender of the response message; determining, whether response messages have been received from a predetermined set of group members; and calculating the group temporal key with at least a key derivation function, a shared group key identified by the group key identifier, and at least one random number from a set of the initiator random number and the received random numbers, when a response message have been received from the predetermined set of group members.

There is also disclosed a computer program for establishing, by a handshake procedure, a group temporal key for group communication, the group comprising at least three members, embodied on a computer-readable medium. The computer program is configured to perform the following when executed on a data-processing device: receiving an initiating message from a handshake initiator, the initiating message comprising a group identifier, a group temporal key identifier, and an initiator random number; receiving a response message from at least one group member, the message comprising a random number of the sender of the message; determining, whether response messages have been received from a predetermined set of group members; and calculating the group temporal key with at least a key derivation function, a shared group key identified by the group key identifier, and at least one random number from a set of the initiator random number and the received random numbers in the at least one received response message, when a response message has been received from the predetermined set of group members

There is furthermore disclosed herein a computer program for establishing, by a handshake procedure, a group temporal key for group communication, the group comprising at least three members, embodied on a computer-readable medium. The computer program is configured to perform the following when executed on a data-processing device: receiving, from a handshake initiator, a key calculation message comprising a group temporal key identifier, a group identifier and random numbers of those group members which were used in calculating the group temporal key; and calculating the group temporal key with at least a key derivation function, the shared group key identified by the group key identifier, the group identifier, and the received random numbers.

The advantages of the invention relate to improved efficiency in the handshake procedure.

**BRIEF DESCRIPTION OF THE DRAWINGS**

The accompanying drawings, which are included to provide a further understanding of the invention and constitute a part of this specification, illustrate embodiments of the invention and together with the description help to explain the principles of the invention. In the drawings:

FIG. 1 discloses a flow diagram illustrating group communication in establishing a session key according to one embodiment of the invention;

**Figure 2A** discloses a flow diagram illustrating handshake initiator actions according to another embodiment of the invention;

**Figure 2B** discloses a flow diagram illustrating handshake initiator actions according to one embodiment of the invention;

**Figure 2C** discloses a flow diagram illustrating handshake initiator actions according to another embodiment of the invention;

**Figure 3A** discloses a flow diagram illustrating handshake initiator actions according to one embodiment of the invention;

**Figure 3B** discloses a flow diagram illustrating handshake initiator actions according to another embodiment of the invention;

**Figure 4A** discloses a flow diagram illustrating handshake responder actions according to one embodiment of the invention;

**Figure 4B** discloses a flow diagram illustrating handshake responder actions according to one embodiment of the invention;

**Figure 4C** discloses a flow diagram illustrating handshake responder actions according to another embodiment of the invention;

**Figure 4D** discloses a flow diagram illustrating handshake responder actions according to another embodiment of the invention;

**Figure 4E** discloses a flow diagram illustrating handshake responder actions according to another embodiment of the invention;

**Figure 5A** discloses a block diagram illustrating a handshake initiator implementation according to one embodiment of the invention;

**Figure 5B** discloses a block diagram illustrating a handshake initiator implementation according to another embodiment of the invention;

**Figure 6A** discloses a block diagram illustrating a handshake responder implementation according to one embodiment of the invention; and

**Figure 6B** discloses a block diagram illustrating a handshake responder implementation according to another embodiment of the invention.

**DETAILED DESCRIPTION OF THE INVENTION**

Reference will now be made in detail to the embodiments of the present invention, examples of which are illustrated in the accompanying drawings.

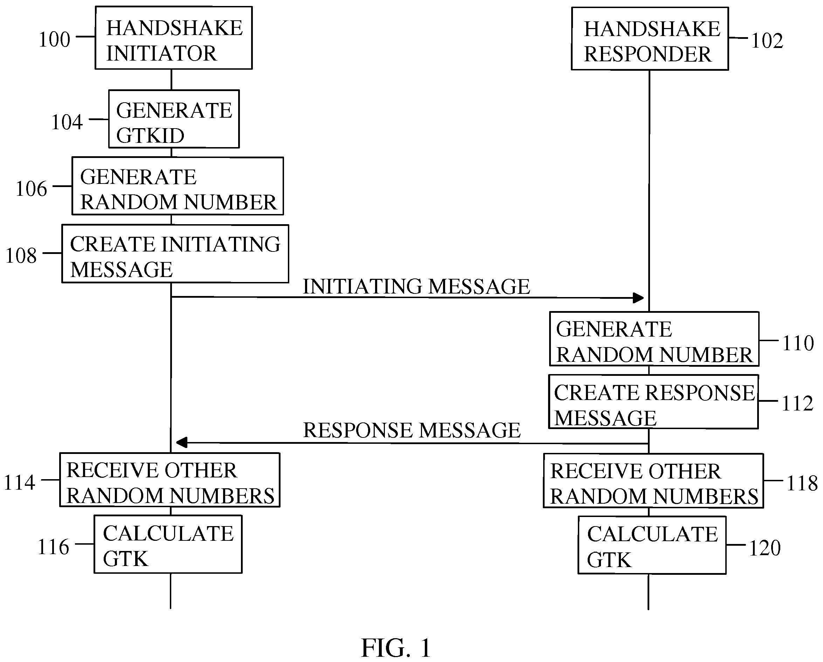

Figure 1 discloses a flow diagram illustrating group communication in establishing a session key according to one embodiment of the invention.

The following embodiment is described using a radio Media Access Control (MAC) layer solution as an example. The Institute of Electrical and Electronics Engineers (IEEE) Wireless Local Access Network (WLAN) specification and the ECMA-368 Ultra Wide Band standard are examples in which the invention may be used. These solutions specify a procedure what is called Group Key Handshake for distribution of temporary session keys for multicast.

In both of the above specifications the group handshake procedures take place between a pair of devices after they have performed a pairwise handshake procedure for derivation of pairwise temporary session keys. Figure 1 discloses a solution according to one embodiment of the invention disclosing an improvement to the current specifications.

Figure 1 discloses only two members of a group. In other words, the group comprises also other members not shown in Figure 1. In this embodiment, one of the group members is a handshake initiator 100. The remaining members act as handshake responders 102. In this embodiment it is assumed that each of the group members has in its possession a shared group key (GK) that is used as a master key. Furthermore, each group member is aware of the other group members, and thus, the group size. Each of the group members are identified e.g. by a MAC address.

The handshake initiator 100 initiates a group handshake by composing and sending a multicast message to the responders. First the handshake initiator generates a group temporal key identifier (GTKID) (step 104) and a random number (step 106). In one embodiment, the random number is a 128-bit cryptographic random number. The initiating message comprises a proposition for the group temporal key identifier (GTKID) for the group temporal key to be derived, and the above generated random number (denoted as R0), which is freshly generated each time the initiator starts a new handshake. In the initiating message the handshake initiator specifies also a group identity (GroupID). The group identity specifies the group in question to the receivers of the initiating message (step 108). In one embodiment, the GroupID identifier both the group and also the group key (the pre-shared key) to be used. In another embodiment, the handshake initiator separately includes in the initiating message the group identity (GroupID) and the group key identity (GKID).

The handshake initiator broadcasts the initiating message to other members of the group. Figure 1 illustrates only one other member (denoted as a handshake responder 102) of all possible group members. When the handshake responder 102 receives the initiating message, it may optionally verify that the proposed group temporal key identifier (GTKID) is new. If it is not new, this result may somehow be indicated to the handshake initiator 100. The handshake responder 102 generates (110) a new random number (denoted as R1) and creates a response message (step 112). The response message comprises at least the generated random number R1. The response message is broadcast to the other members of the group. Each group member (other than the handshake initiator) performs the same response message creation and sending.

The handshake initiator 100 receives the response message comprising the random number R1 (step 114). Similarly, it receives also other random numbers generated by the remaining group members. In step 116, the handshake initiator 100 calculates the group temporal key and optionally also a key confirmation key by using an appropriate function. In one embodiment, the function used is a pseudorandom function and it takes e.g. the following parameters:

- group key (GK)
- group identifier (GroupID)
- random numbers R0, R1, ..., R(n-1) of the handshake initiator and the handshake responders, where n is the total number of group members
- g is a function that takes random numbers as input.

The following function can be written:

$$GTK||KCK \quad = \quad PRF(GK, \quad GroupID, \quad R0, \quad g(R1,R2,…,R\{n-1\}),$$

where the output of PRF is of required size, typically 256 bits. The PRF can be implemented e.g. as HMAC using SHA-256 with the group key (GK) as the key and the rest of the PRF input as the input data. The latter part (128 bits) of the outcome of the PRF function forms the key confirmation key (KCK). It can be used in confirming that the group temporal key (GTK) was properly generated. The PRF function may take also other additional inputs not disclosed above. One additional input may be a string "group_key", which merely indicates that the result of the PRF function is a group key.

Each of the group members (other than the handshake initiator) performs the same group temporal key (GTK) generation procedure (steps 118, 120). As described above, since the handshake initiator 100 identified the group key (GK) to be used in the initiating message by the group key identity, each of the group members (responders) is able to retrieve the group key using the group key identifier. The calculation of the group temporal key (GTK) is performed exactly in the same manner as in the case of the handshake initiator. The group temporal key (GTK) can then be used to to secure multicast traffic from a sending device to a group of recipient devices.

In the above, a g function was used within the PRF function. To avoid ordering and numbering of the group members the function g may be commutative, that is, the output of g is independent of the order of the inputs. An example of a commutative function is:

$$g(R1,R2,…,R\{n-1\}) = R1 \oplus R2 \oplus …\oplus R\{n-1\}.$$

If this function is used, a responder can force the output of g to any selected value by waiting others to send their responder random numbers first, and then selecting its own responder nonce appropriately. This does not cause problems if the handshake initiator always selects a fresh random number R0. If this cannot be assumed then it is possible to select g to have sufficient one-way properties to prevent forcing the output to a selected value. Examples of such functions are e.g. a cryptographic accumulator and an exponent function. The cryptographic accumulator may be e.g. the following:

$$g(R1,R2,…,R\{n-1\}) = prf(R1) \land prf(R2) \land ... \land prf(R\{n-1\}),$$

where $\land$ is the bitwise "and" of the strings prf(Ri) of suitable length.

Correspondingly, the exponent function may be e.g. the following:

$$g(R1,R2,…,R\{n-1\}) = \alpha^{R1 \cdot R2 \cdot …\cdot R\{n-1\}} \mod p.$$

The solution disclosed in Figure 1 may be implemented in the Media Access Control (MAC) layer. If it is implemented above the MAC layer, then a procedure is provided to transport the session key (the group temporal key (GTK)) to the MAC layer.

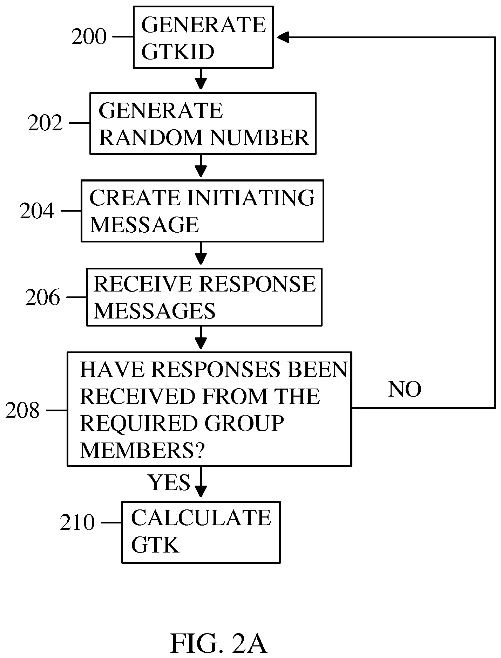

Figure 2A discloses a flow diagram illustrating handshake initiator actions according to one embodiment of the invention. The initial situation in Figure 2A is quite the same as in Figure 1. Step 200-206 in Figure 2A are equivalent with steps 104-108 and 114 in Figure 1. Therefore, the description of these steps is omitted.

While the embodiment disclosed in Figure 1 assumed that all group members are present and every group members' random numbers were used in calculating the group temporal key, Figure 2A discusses about a situation in which all group members may not necessarily be present when the initiating message is sent or when all the received random numbers are not used in calculating the group temporal key.

In step 208 it is determined whether responses have been received from the required group members. However, the term "required" may have different meanings in different embodiments of the invention.

In one embodiment, the group temporal key is not calculated until a random number is received from every group member. Since the handshake initiator and also other group members are aware of the group structure, the handshake initiator is able to determine whether response messages (and thus random numbers) have been received from every group member. Correspondingly, since each handshake responder is aware of the group structure, it is able to determine whether response messages (and thus random numbers) have been received from every group member. If each group member has provided its own random number, the handshake initiator and the handshake responders are able to calculate the group temporal key, step 210, as already discussed in Figure 1 in more detail.

If a random number has not been received from every group member, the handshake initiator may reinitiate the handshake procedure. An absence of at least one random number also means that all group members were not present when the handshake procedure was initiated. The handshake initiator may reinitiate the handshake procedure again with the same configuration as in the previous case. Another option for the handshake initiator is to reinitiate the handshake procedure with those handshake responders which provided the other members of the group with its own random number.

In one embodiment, there may a parameter that determines the maximum number of reinitiations in a case that a random number is not received from a handshake responder. If the maximum number of reinitiations is reached, and if the handshake procedures are implemented in a MAC layer, the MAC layer may forward a notification to upper layers that the handshake procedure failed. A user acting as a handshake initiator may then decide how to proceed with the handshake procedure.

In another embodiment of Figure 2A, the handshake initiator may be provided with configuration information that determines predetermined members of the group as a core part of the group. Therefore, if in step 208 it is determined that all the members in the core part has sent their random numbers, the handshake initiator calculates the group temporal key and uses only random numbers from those group members belonging to the core part in the group temporal key calculation. Correspondingly, if all the group members in the core part have not sent their random numbers, the handshake procedure is aborted and the handshake initiator may start the handshake procedure again. The core part may also comprise only one member (e.g. the handshake initiator or any other group member). Therefore, in such an embodiment, only one random number would be used in calculating the group temporal key. It is evident that the number of group members included in the core part may be anything between l...n, where n is the total amount of group members.

In another embodiment of Figure 2A, the handshake initiator calculates the group temporal key based on those random numbers that were received from the group members, regardless of the fact that random numbers might not have been received from every group member.

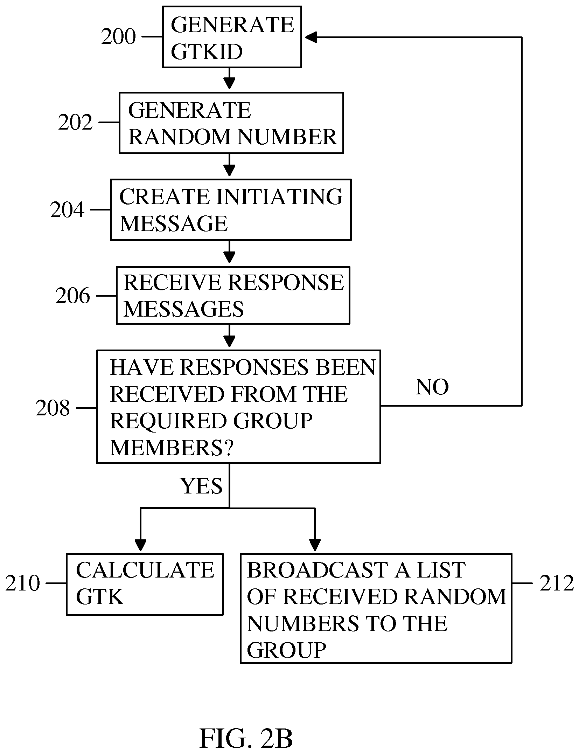

Figure 2B provides an addition to the solution disclosed in Figure 2A. In Figure 2B, the handshake initiator includes in a broadcast message a list of received random numbers and broadcasts the message (step 212). By doing this, the handshake initiator informs the other group members of those random numbers that are used (by the handshake initiator) to calculate the group temporal key.

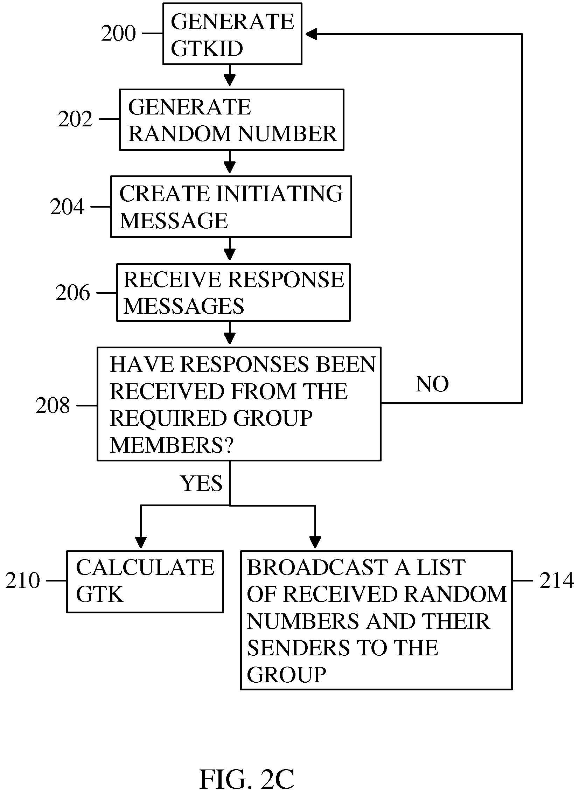

Figure 2C provides an addition to the solution disclosed in Figure 2B. In Figure 2C, the handshake initiator includes in a broadcast message a list of received random numbers and their senders, and broadcasts the message (step 214). By doing this, the handshake initiator informs the other group members of those random numbers that are used (by the handshake initiator) to calculate the group temporal key. Since the broadcast message identifies also the senders of the random numbers, each receiver of the broadcast message is able to check that the random numbers in the broadcast message are the same as the random number received earlier from each of the group members.

In the embodiments disclosed above, it is possible equip the group members with configuration information e.g. when creating the group, the configuration information determining rules e.g. how to proceed when all group members are not present when a handshake procedure is initiated.

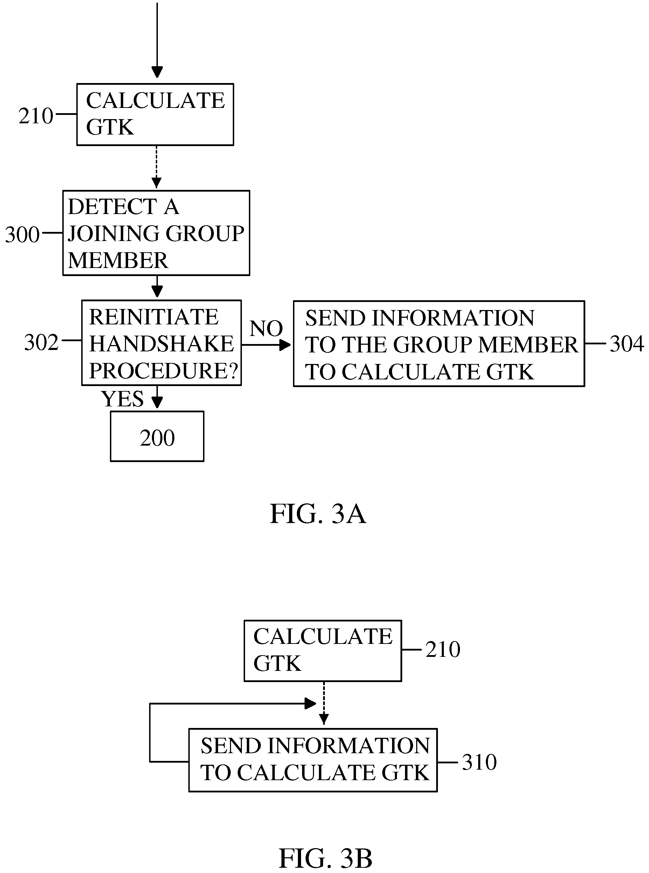

Figure 3A discloses a flow diagram illustrating handshake initiator actions according to one embodiment of the invention. The situation in Figure 3A is that the all group members were not present when the group temporal key (GTK) was calculated, step 210. When the handshake initiator detects (step 300) that a group member that was not present when the group temporal key (GTK) was calculated, is now present, the handshake initiator has at least two options. The handshake initiator may reinitiate the handshake procedure to include the joined members to the group (steps 302, 200). Alternatively, the handshake initiator may send to the joined group member information based on which the group member is able to calculate the used group temporal key (GTK) (step 304). The sent information comprises the same information that the handshake initiator included in the handshake initiating message (in other words, the group key identifier (or the group key identifier and the group identity), the group temporal key identifier (GTKID), and the random number of the handshake initiator. In addition, the sent information comprises the random numbers that the initiator received from responders and that were used in calculating the group temporal key (GTK). The information may also tell to which random number relates to which responder.

Figure 3B discloses a flow diagram illustrating handshake initiator actions according to another embodiment of the invention. While Figure 3A described that the handshake initiator sent the information (as disclosed in step 304 in Figure 3A) only after detecting a group member that was not present when the group temporal key (GTK) was generated, in the embodiment disclosed in Figure 3B the handshake initiator periodically sends the required information needed to calculate the group temporal key (GTK) to the group member that were absent.

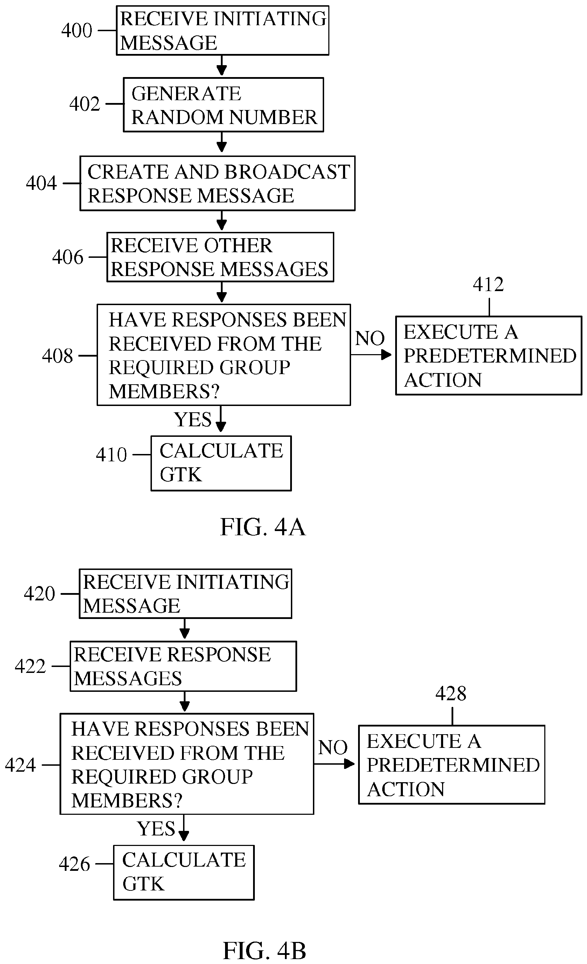

Figure 4A discloses a flow diagram illustrating handshake responder actions according to one embodiment of the invention. The handshake responder receives a broadcast message (initiating message) from a handshake initiator (step 400). In response to receiving the broadcast message, the handshake responder generates a new random number (step 402). Furthermore, the handshake responder creates a response message that comprises at least the generated random number, and broadcasts the response message to the group (step 404) .

The handshake responder receives from at least one other handshake responder similarly broadcast response messages (step 406). Each response message comprises a random number generated by the handshake responder who sent the response message. In step 408 it is determined whether responses have been received from the required group members. However, the term "required" may have different meanings in different embodiments of the invention.

In one embodiment, every group member has to send its own random number for the group temporal key calculation. Therefore, the handshake responder checks whether it has received a response message from all the group members. In this embodiment, each group member has been configured with information that determines the group. In other words, each group member knows those members belonging to this particular group. If the handshake responder has not received a response message from all the group members, it executes a predetermined action (step 412). The predetermined action may e.g. be aborting the handshake procedure. If the handshake responder has received a response message from all the group members, it calculates the group temporal key (step 410). The calculation process of the group temporal key was as already discussed in Figure 1 in more detail.

In another embodiment, the handshake responder has been provided with configuration information that determines predetermined members of the group as a core part of the group. Therefore, if in step 408 it is determined that all the members in the core part has sent their random numbers in step 406, the handshake responder calculates the group temporal key and uses only random numbers from those group members belonging to the core part in the group temporal key calculation. Correspondingly, if all the group members in the core part have not sent their random numbers, a predetermined action is executed (step 412). The predetermined action may e.g. be aborting the handshake procedure.

Figure 4B discloses a flow diagram illustrating handshake responder actions according to one embodiment of the invention. In this embodiment, the handshake responder has been provided with configuration information that determines predetermined members of the group as a core part of the group. In this case, the handshake responder does not belong to the core part.

The handshake responder receives a broadcast message (initiating message) from a handshake initiator (step 420). Since the handshake responder does not belong to the core part, it does not send a response message in response to receiving the initiating message from the handshake initiator. However, the handshake responder receives from at least one other handshake responder a response message (step 422). In this embodiment, only those group members belonging to the core part broadcast a response message to other group members. Each response message comprises a random number generated by the handshake responder who sent the response message.

In step 424 it is determined whether responses have been received from the required group members. In this embodiment, the handshake responder checks whether it has received response messages from all of the group members belonging to the core part. If it has not, the handshake responder executed a predetermined action (step 412). The predetermined action may e.g. be aborting the handshake procedure.

If the handshake responder has received response messages from all of the group members belonging to the core part, it calculates the group temporal key (step 426) and uses only random numbers from those group members belonging to the core part in the group temporal key calculation. The calculation process of the group temporal key was as already discussed in Figure 1 in more detail.

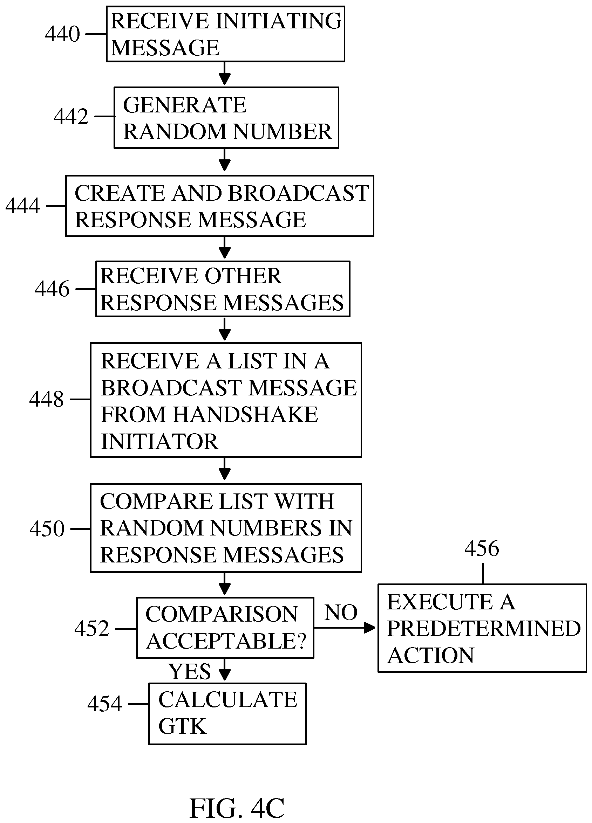

Figure 4C discloses a flow diagram illustrating handshake responder actions according to another embodiment of the invention. The embodiment disclosed in Figure 4C follows the embodiment disclosed in Figure 4A until step 446. Therefore, steps 440-446 of Figure 4C are identical with steps 400-406 of Figure 4A, and therefore, the description relating to these steps is herein omitted.

In step 448, the handshake responder receives from a handshake initiator a broadcast message comprising a list. In one embodiment, the list comprises those random numbers that the handshake initiator uses in calculating the group temporal key. In another embodiment, the list identifies also which random number relates to which group member. Next, the handshake responder compares (step 450) the list with the random number it received in step 440 from the handshake initiator and in step 446 from other group members.

If the list comprised only random numbers used by the handshake initiator to calculate the group key, the handshake responder checks that it has received the same random numbers in the broadcast messages (response messages) from other members of the group. If the list identifies also the senders of the random numbers, the handshake responder may check that it received response messages (each response message comprising a random number) from the same senders and that a random number of a sender is that same than the random number of the sender in the list.

In one embodiment, the comparison is acceptable only if all random numbers received from the handshake initiator equal with the random numbers received in the broadcast messages. In another embodiment, it may not be necessary that all random numbers received by the handshake responder equal with the random number in the list from the handshake initiator.

If the result of the comparison is acceptable, the handshake responder calculates the group temporal key (step 454) and uses the random numbers in the list in the group temporal key calculation. The calculation process of the group temporal key was as already discussed in Figure 1 in more detail. If the result of the comparison is acceptable, the handshake responder executes a predetermined action (step 456). The predetermined action may e.g. be aborting the handshake procedure.

Although not disclosed in Figures 1, 2A-2B, 3A-3B and 4A-4C, the handshake procedure may continue with verification steps in which it is verified that each group member has calculated the group temporal key correctly and the calculated group temporal key can now be used.

The handshake initiator broadcasts a verification message to the group. In the message, the initiator includes the same random number (R0) as contained in message the initiating message and a cryptographic check code GTK MIC (Group Temporal Key Message Integrity Code) computed for this message using the newly derived Key Confirmation Key (KCK). On the reception of the aforementioned message, the handshake responders shall perform the following two steps.

> 1. Verify the GTK MIC for this message using the KCK. If the recalculated GTK MIC does not match the GTK MIC in received message, the received message is discarded and the handshake is aborted. Otherwise, the received message is considered as a proof that the initiator holds the correct GK, has derived the correct GTK and KCK.
> 2. Construct and send a verification message to the group.

Correspondingly, the handshake responder broadcasts a verification message the group (step 2 above). In the message, the handshake responder includes the same random number in the response message created in step 112 and a cryptographic check code GTK MIC computed for this message using the newly derived KCK.

On reception of the above message, the handshake initiator and other handshake responders verify the GTK MIC for this message using the KCK. If the calculated GTK MIC does not match with the GTK MIC field in the message, the message is discarded and the handshake is aborted.

When the handshake initiator and the handshake responders have received and accepted all the verification messages, they install the GTK and GTKID for the group.

Although it was disclosed above that the handshake responders wait for a verification message from the handshake initiator and that the handshake responders first verify the message, and only then the handshake responders send their corresponding verification messages, in another embodiment it is possible that that members of a group start the verification procedure at the same time. In other words, when a group member has calculated the group temporal key (GTK) and the Key Confirmation Key (KCK), the group member (both the handshake initiator and the handshake responders) may then start the verification process by sending a verification message that comprises the original random number of the group member and a cryptographic check code GTK MIC computed for the message using the newly derived KCK.

The above verification procedure is only one possible alternative and other methods may also be used.

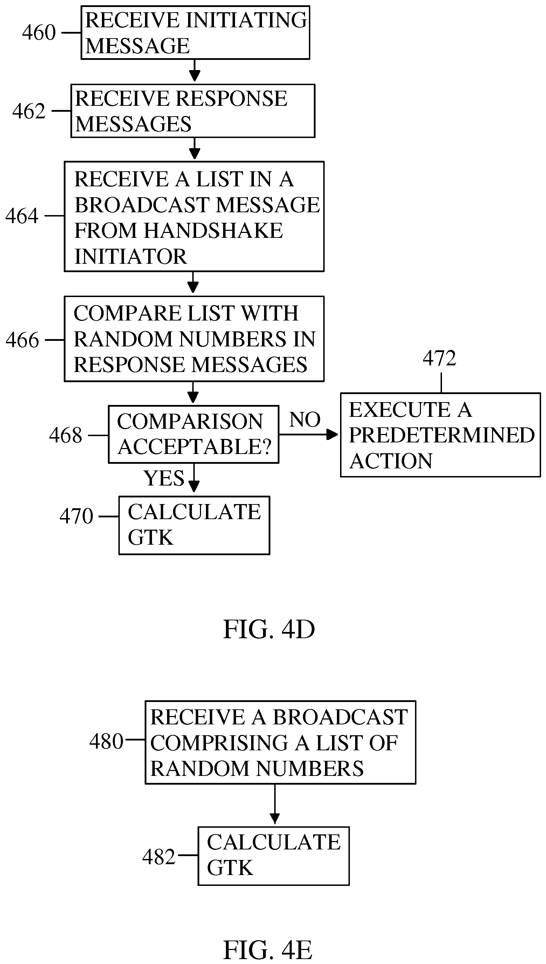

Figure 4D discloses a flow diagram illustrating handshake responder actions according to another embodiment of the invention. The embodiment disclosed in Figure 4D follows the embodiment disclosed in Figure 4B until step 422. Therefore, steps 460-462 of Figure 4D are identical with steps 420-422 of Figure 4B, and therefore, the description relating to these steps is herein omitted.

In step 464, the handshake responder receives from a handshake initiator a broadcast message comprising a list. In one embodiment, the list comprises those random numbers that the handshake initiator uses in calculating the group temporal key. In another embodiment, the list identifier also which random number relates to which group member. Next, the handshake responder compares (step 466) the list with the random number it received in step 460 from the handshake initiator and in step 462 from other group members.

If the list comprised only random numbers used by the handshake initiator to calculate the group key, the handshake responder checks that it has received the same random numbers in the broadcast messages (response messages) from other members of the group. If the list identifies also the senders of the random numbers, the handshake responder may check that it received response messages (each response message comprising a random number) from the same senders and that a random number of a sender is that same than the random number of the sender in the list.

If the result of the comparison is acceptable, the handshake responder calculates the group temporal key (step 470) and uses the random numbers in the list in the group temporal key calculation. The calculation process of the group temporal key was as already discussed in Figure 1 in more detail. If the result of the comparison is acceptable, the handshake responder executes a predetermined action (step 472). The predetermined action may e.g. be aborting the handshake procedure.

Figure 4E discloses a flow diagram illustrating handshake responder actions according to another embodiment of the invention.

In the receiving step 480 information, sent in step 304 in Figure 3A or in step 310 in Figure 3B) is received from a handshake initiator by a group member that was not present when a handshake procedure was initiated. The received information comprises the same information that the handshake initiator included in the handshake initiating message (in other words, the group key identifier (or the group key identifier and the group identity), the group temporal key identifier (GTKID), and its random number. In addition, the sent information comprises the random numbers that the initiator received from the responders and that were used in calculating the group temporal key (GTK). Based on the received information, the joining group member is able to calculated the needed group temporal key (GTK) (step 482). The calculation process of the group temporal key was as already discussed in Figure 1 in more detail.

In one embodiment of Figures 4D or 4E, a handshake responder that previously did not broadcast its random number to other group members, creates a random number and sends it to the handshake initiator. The handshake initiator generates a message integrity code (MIC), which is calculated by using the received random number, and sends the MIC back to the handshake responder.

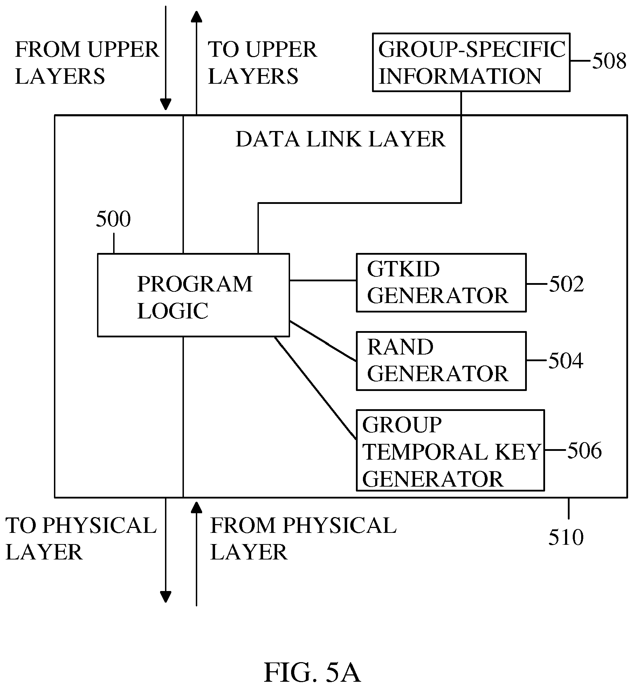

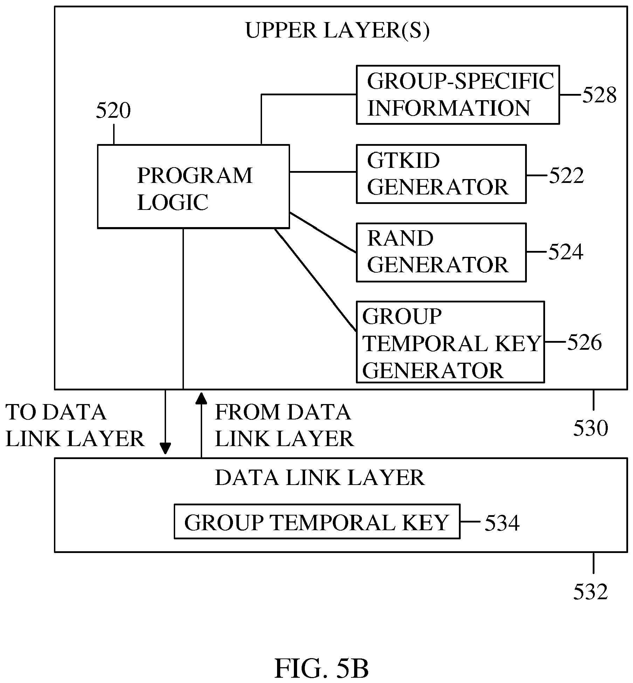

Figure 5A discloses a block diagram illustrating a handshake initiator implementation according to one embodiment of the invention. According to Figure 5, the handshake procedure is implemented in the data link layer, e.g. in the Media Access Control (MAC) layer 510.

The operation of the handshake procedure is controlled by a program logic 500. Some of the information needed in the handshake procedure is received from upper application layers, namely, group-specific information 508. The MAC layer 510 comprises also a group temporal key identity (GTKID) generator 502, a random number generator 504 and a group temporal key (GTK) generator 506.

Figure 5B discloses a block diagram illustrating a handshake initiator implementation according to another embodiment of the invention. Whereas in Figure 5A the handshake initiator was implemented in the data link layer, in Figure 5B the handshake initiator is implemented above the data link layer (upper layer(s) 530). The implementation may be distributed among several layers or it may be a single layer solution.

The operation of the handshake procedure is controlled by a program logic 520. The upper layer 530 comprises also a group temporal key identity (GTKID) generator 522, a random number generator 524, a group temporal key (GTK) generator 526, and group-specific information 528. The group-specific information comprises e.g. a predetermined shared group key, a group key identifier and a group identifier.

When the group temporal key 534 has been derived, the key is provided to the data link layer 532. The key may then be used to secure communication between the group members.

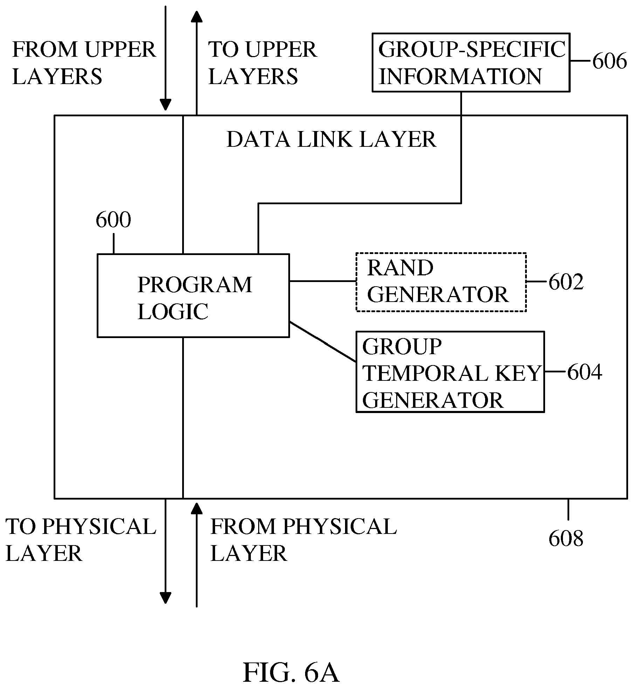

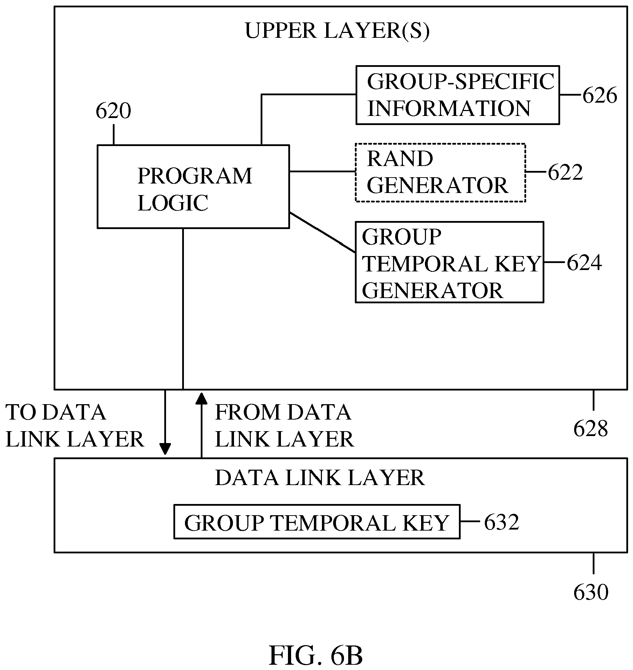

Figure 6A discloses a block diagram illustrating a handshake responder implementation according to one embodiment of the invention. According to Figure 6, the handshake procedure is implemented in the data link layer, e.g. in the Media Access Control (MAC) layer 608.

The operation of the handshake procedure is controlled by a program logic 600. Some of the information needed in the handshake procedure is received from upper application layers, namely, group-specific information 606. The MAC layer 608 comprises also a random number generator 602 and a group temporal key (GTK) generator 604.

Figure 6B discloses a block diagram illustrating a handshake responder implementation according to another embodiment of the invention. Whereas in Figure 6A the handshake responder was implemented in the data link layer, in Figure 6B the handshake responder is implemented above the data link layer (upper layer(s) 628). The implementation may be distributed among several layers or it may be a single layer solution.

The operation of the handshake procedure is controlled by a program logic 620. The upper layer 628 comprises also a random number generator 622, a group temporal key identity (GTKID) generator 624, and group-specific information 626. The group-specific information comprises e.g. a predetermined shared group key, a group key identifier and a group identifier.

The dashed block line of the random number generator 602 and 622 means that the random number generator 602 and 622 is an optional feature. Depending on the implementation, the handshake responder may or may not comprise the random number generator 602 and 622.

When the group temporal key 632 has been derived, the key is provided to the data link layer 630. The key may then be used to secure communication between the group members.

The advantages of the invention relate to improved efficiency achieved e.g. by the reduction of number of messages needed to establish a secret session key. Furthermore, in some prior art solutions group members had to first create a pairwise temporary key in order to be able to distribute a group member specific group temporal key to other group members. In other words, each group member has a group member specific group temporal key that has to be distributed among the group members before group communication. The invention introduces a way to establish a single group temporal key common for all group members to secure group communication. It is also evident that the solution also simplifies the idea of using a group temporal key since there is no need to establish separate pairwise temporal keys at all.

It is also evident that amount of information, that is the amount of different temporary keys, needed reduces significantly since there is no need to create or store any pairwise temporary keys. For example, let's assume that a group comprises six members. Each member has to establish a pairwise temporal key with every other group member. Furthermore, every group member has a member-specific group temporal key. As a summary, each group member has five pairwise temporal keys and six group temporal keys (an own group temporal key and five group temporal keys from the other group members). The invention enables to use only one group temporal key common for all group members instead of the multiple pairwise temporal keys and group temporal keys used in prior art.

The exemplary embodiments may be implemented into any device that can be part of a group. The transmission path between the group devices may be a wired or a wireless connection.

Although it was disclosed above that the invention may be used in the IEEE WLAN solutions and the ECMA-368 Ultra Wide Band standard, the disclosed solution is applicable into any architecture that needs group temporal keys to secure group communication. For example, the invention may be applied in the WiNet standard for networking of ultra wide band radio devices by WiMedia consortium. The standard specifies the WiNet Association Model (WAM) procedure, which takes place above the MAC layer and in which a long term Group Key (GK) is distributed to all devices belonging to the group. The session keys, Group Temporary Keys (GTK) for group communication (multicast), are then derived using the MAC layer procedures.

One of the benefits of the invention is that is avoids pairwise handshakes. Furthermore, it decreases the amount of messages between group members. Moreover, the group temporal key is established substantially simultaneously by all group members. Furthermore, since pairwise handshakes and thus pairwise temporal keys are not needed, memory consumption in group member's devices decreases.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CDR, CD-RW, DVD, DVD-ROM, DVD±RW, DVD±R, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A method comprising:

   providing a handshake initiator (100) with a shared group key, a group key identifier and a group identifier, the group identifier identifying the group members, wherein the group comprises at least three members;
   generating (104) a group temporal key identifier;
   generating (106) an initiator random number;
   creating (108) an initiating message comprising the group identifier, the group key identifier, the group temporal key identifier, and the initiator random number;
   providing the other group members with configuration information for determining a predetermined set of group members (102);
   sending the initiating message to other group members (102);
   receiving (114) a response message from at least one group member (102) of the predetermined set of group members, the response message comprising a random number; and
   calculating (116, 120) the group temporal key with at least a key derivation function, the shared group key identified by the group key identifier, the initiator random number and the received random numbers, when a response message has been received from each member of the predetermined set of group members, and wherein the group temporal key is calculated independently at both the handshake initiator and at each of the group members.

2. The method according to claim 1, wherein when determining that response messages have not been received from each member of the predetermined set of group members, the method further comprises one of the following steps:

   reinitiating the handshake procedure, and
   aborting the handshake procedure.

3. The method according to claim 1 or 2, wherein the predetermined set of group members comprises one of: all the group members, and a subgroup of all the group members.

**4.** The method according to any of claims 1 to 3, further comprising:
sending a message comprising random numbers used in calculating the group temporal key to the group.

**5.** The method according to any of claims 1 to 4, further comprising:
sending a message comprising random numbers used in calculating the group temporal key, the group key identifier and the group identifier to at least one group member from which a response message was not received.

**6.** The method according to any of claims 1 to 5, further comprising:
indicating in the message whether the order of the initiator random number and the random numbers used in calculating the group temporal key is significant.

**7.** The method according to any of claims 1 to 6, wherein the group key identifier and the group identifier are comprised in a single identifier.

**8.** The method according to any of claims 1 to 7, wherein the handshake procedure is performed above the data link layer, and wherein the method further comprises:
transporting the calculated group temporal key to the data link layer.

**9.** A method comprising:

providing a group member (102) with a shared group key, a group key identifier and a group identifier, the group identifier identifying group members, wherein the group member is one member of a group comprising at least three members;
providing the group member with configuration information for determining a predetermined set of group members;
receiving, from a handshake initiator (100), a key calculation message comprising a group temporal key identifier, the group identifier and a random number and subsequently receiving (118) from other group members random numbers; and
calculating (116, 120) the group temporal key with at least a key derivation function, the shared group key identified by the group key identifier, the initiator random number and the received random numbers, when a response message has been received from each member of the predetermined set of group members.

**10.** The method according to claim 9, further comprising:
indicating in the key calculation message whether the order of the random numbers in calculating the group temporal key is significant.

**11.** A device (100) comprising means to perform the method steps of any of claims 1 to 8.

**12.** A device comprising means to perform the method steps of claim 9 or claim 10.

**13.** A computer program comprising a set of instructions stored on a computer-readable medium, which when executed on a processor cause performance of any of claims 1 to 8 or 9 to 10.


**Patentansprüche**

**1.** Verfahren, umfassend:

Bereitstellen eines Handshake-Initiators (100) mit einem gemeinsamen Gruppenschlüssel, einer Gruppenschlüsselkennung und einer Gruppenkennung,
wobei die Gruppenkennung die Gruppenmitglieder identifiziert,
wobei die Gruppe mindestens drei Mitglieder umfasst;
Erzeugen (104) einer temporären Gruppenschlüsselkennung;
Erzeugen (106) einer Initiator-Zufallszahl;
Erzeugen (108) einer auslösenden Nachricht, die die Gruppenkennung, die Gruppenschlüsselkennung, die temporäre Gruppenschlüsselkennung und die Initiator-Zufallszahl umfasst;
Bereitstellen von Konfigurationsinformationen für die anderen Gruppenmitglieder zum Bestimmen von einen vorbestimmten Satz von Gruppenmitgliedern (102);

Senden der auslösenden Nachricht an andere Gruppenmitglieder (102);
Empfangen (114) einer Antwortnachricht von mindestens einem Gruppenmitglied (102) des vordefinierten Satzes von Gruppenmitgliedern, wobei die Antwortnachricht eine Zufallszahl umfasst; und
Berechnen (116, 120) des temporären Gruppenschlüssels mit mindestens einer Schlüsselableitungsfunktion, wobei der gemeinsame Gruppenschlüssel durch die Gruppenschlüsselkennung, die Initiator-Zufallszahl und die empfangenen Zufallszahlen identifiziert wurde, wenn von jedem Mitglied des vorbestimmten Satzes von Gruppenmitgliedern eine Antwortnachricht empfangen wurde, und wobei der temporäre Gruppenschlüssel unabhängig sowohl am Handshake-Initiator als auch an jedem der Gruppenmitglieder berechnet wird.

2. Verfahren gemäß Anspruch 1, wobei das Verfahren ferner einen der folgenden Schritte umfasst, wenn bestimmt wird, dass Antwortnachrichten nicht von jedem Element des vorbestimmten Satzes von Gruppenmitgliedern empfangen wurden:
Wiedereinleiten des Handshake-Vorgangs und Abbrechen des Handshake-Vorgangs.

3. Verfahren gemäß Anspruch 1 oder 2, wobei der vorgegebene Satz von Gruppenmitgliedern eines von allen Gruppenmitgliedern und eine Untergruppe aller Gruppenmitglieder umfasst.

4. Verfahren gemäß einem der Ansprüche 1 bis 3, ferner umfassend:
Senden einer Nachricht mit Zufallszahlen, die bei der Berechnung des temporären Gruppenschlüssels für die Gruppe verwendet werden.

5. Verfahren gemäß einem der Ansprüche 1 bis 4, ferner umfassend:
Senden einer Nachricht, die Zufallszahlen umfasst, die zum Berechnen des temporären Gruppenschlüssels, der Gruppenschlüsselkennung und der Gruppenkennung für mindestens ein Gruppenmitglied verwendet werden, von dem keine Antwortnachricht empfangen wurde.

6. Verfahren gemäß einem der Ansprüche 1 bis 5, ferner umfassend; Anzeigen in der Nachricht, ob die Reihenfolge der Initiator-Zufallszahl und der Zufallszahlen, die bei der Berechnung des temporären Gruppenschlüssels verwendet werden, signifikant ist.

7. Verfahren gemäß einem der Ansprüche 1 bis 6, wobei die Gruppenschlüsselkennung und die Gruppenkennung in einer einzigen Kennung enthalten sind.

8. Verfahren gemäß einem der Ansprüche 1 bis 7, wobei das Handshake-Verfahren oberhalb der Datenverbindungsschicht durchgeführt wird, und wobei das Verfahren ferner umfasst: Transportieren des berechneten temporären Gruppenschlüssels zu der Datenverbindungsschicht.

9. Verfahren, umfassend:

Bereitstellen eines Gruppenschlüssels (102) mit einem gemeinsamen Gruppenschlüssel, einer Gruppenschlüsselkennung und einer Gruppenkennung,
wobei die Gruppenkennung Gruppenmitglieder identifiziert, wobei das Gruppenmitglied ein Mitglied einer Gruppe ist, die mindestens drei Mitglieder umfasst;
Bereitstellen von Konfigurationsinformationen für das Gruppenmitglied zum Bestimmen eines vorgegebenen Satzes von Gruppenmitgliedern;
Empfangen einer Schlüsselberechnungsnachricht von einem Handshake-Initiator (100), die einen temporären Gruppenschlüsselkennung, die Gruppenkennung und eine Zufallszahl umfasst, und nachfolgendes Empfangen (118) von Zufallszahlen anderer Gruppenmitglieder; und
Berechnen (116, 120) des temporären Gruppenschlüssels mit mindestens einer Schlüsselableitungsfunktion, wobei der gemeinsame Gruppenschlüssels durch die Gruppenschlüsselkennung, die Initiator-Zufallszahl und die empfangenen Zufallszahlen identifiziert wird, wenn von jedem Mitglied des vorbestimmten Satzes von Gruppenmitgliedern eine Antwortnachricht empfangen wurde.

10. Verfahren gemäß Anspruch 9, das weiterhin umfasst:
Anzeigen in der Schlüsselberechnungsnachricht, ob die Reihenfolge der Zufallszahlen bei der Berechnung des temporären Gruppenschlüssels signifikant ist.

11. Vorrichtung (100) mit Mitteln zum Ausführen der Verfahrensschritte gemäß einem der Ansprüche 1 bis 8.

**12.** Vorrichtung mit Mitteln zum Ausführen der Verfahrensschritte gemäß Anspruch 9 oder Anspruch 10.

**13.** Computerprogramm, umfassend eine Reihe von Anweisungen, die auf einem computerlesbaren Medium gespeichert sind, die, wenn sie auf einem Prozessor ausgeführt werden, das Durchführen eines der Ansprüche 1 bis 8 oder 9 bis 10 bewirken.

## Revendications

**1.** Procédé comprenant :

la fourniture d'un initiateur d'établissement de liaison (100) avec une clé de groupe partagée, un identifiant de clé de groupe et un identifiant de groupe, l'identifiant de groupe identifiant les membres du groupe, selon lequel le groupe comprend au moins trois membres ;
la génération (104) d'un identifiant de clé temporelle de groupe ;
la génération (106) d'un initiateur de nombre aléatoire ;
la création (108) d'un message d'initiation comprenant l'identifiant de groupe, l'identifiant de clé de groupe, l'identifiant de clé temporelle de groupe, et l'initiateur de nombre aléatoire ;
la fourniture aux autres membres du groupe d'informations de configuration pour pouvoir calculer un ensemble prédéterminé de membres de groupe (102) ;
l'envoi du message d'initiation aux autres membres du groupe (102) ;
la réception (114) d'un message de réponse en provenance d'au moins un membre du groupe (102) de l'ensemble prédéterminé de membres de groupe, le message de réponse comprenant un nombre aléatoire ; et
le calcul (116, 120) de la clé temporelle de groupe par le biais d'au moins une fonction de dérivation de clé, la clé de groupe partagée identifiée par l'identifiant de clé de groupe, l'initiateur de nombre aléatoire et les nombres aléatoires reçus, lorsqu'un message de réponse a été reçu en provenance de chaque membre de l'ensemble prédéterminé de membres de groupe, et selon lequel la clé temporelle de groupe est calculée de manière indépendante à la fois au niveau de l'initiateur d'établissement de liaison qu'au niveau de chacun des membres du groupe.

**2.** Procédé selon la revendication 1, selon lequel lors du calcul que les messages de réponse n'ont pas été reçus en provenance de chaque membre de l'ensemble prédéterminé de membres de groupe, le procédé comprend en outre l'une des étapes suivantes :

la ré-initiation de la procédure d'établissement de liaison, et
l'avortement de la procédure d'établissement de liaison.

**3.** Procédé selon la revendication 1 ou la revendication 2, selon lequel l'ensemble prédéterminé de membres de groupe comprend l'un parmi tous les membres de groupe, et un sous-groupe de tous les membres de groupe.

**4.** Procédé selon l'une quelconque des revendications 1 à 3, comprenant en outre l'envoi au groupe d'un message comprenant des nombres aléatoires utilisés dans le calcul de la clé temporelle de groupe.

**5.** Procédé selon l'une quelconque des revendications 1 à 4, comprenant en outre l'envoi, d'un message comprenant des nombres aléatoires utilisés dans le calcul de la clé temporelle de groupe, l'identifiant de clé de groupe et l'identifiant de groupe, à au moins un membre de groupe duquel un message de réponse n'aura pas été reçu.

**6.** Procédé selon l'une quelconque des revendications 1 à 5, comprenant en outre le fait d'indiquer dans le message si l'ordre de l'initiateur de nombres aléatoires et des nombres aléatoires utilisés dans le calcul de clé temporelle de groupe est significatif.

**7.** Procédé selon l'une quelconque des revendications 1 à 6, selon lequel l'identifiant de clé de groupe et l'identifiant de groupe sont constitués par un seul identifiant.

**8.** Procédé selon l'une quelconque des revendications 1 à 7, selon lequel la procédure d'établissement de liaison est effectuée au-dessus de la couche de liaison de données, et selon lequel le procédé comprend en outre le transport de la clé temporelle de groupe à la couche de liaison de données.

**9.** Procédé comprenant :

la fourniture d'un membre de groupe (102) avec une clé de groupe partagée, un identifiant de clé de groupe et un identifiant de groupe, l'identifiant de groupe identifiant les membres du groupe, selon lequel le membre du groupe est un membre dans un groupe comprenant au moins trois membres ;
la fourniture au membre du groupe avec des informations de configuration pour pouvoir calculer un ensemble prédéterminé de membres de groupe ;
la réception, en provenance d'un initiateur d'établissement de liaison (100), d'un message de calcul de clé comprenant un identifiant de clé temporelle de groupe, l'identifiant de groupe et un nombre aléatoire et la réception ultérieure (118) en provenance des autres membres du groupe de nombres aléatoires ; et
le calcul (116, 120) de la clé temporelle de groupe par le biais d'au moins une fonction de dérivation de clé, la clé de groupe partagée identifiée par l'identifiant de clé de groupe, l'initiateur de nombre aléatoire et les nombres aléatoires reçus, lorsqu'un message de réponse a été reçu en provenance de chaque membre de l'ensemble prédéterminé de membres de groupe.

**10.** Procédé selon la revendication 9, comprenant en outre le fait d'indiquer dans le message si l'ordre de l'initiateur de nombres aléatoires et des nombres aléatoires utilisés dans le calcul de clé temporelle de groupe est significatif.

**11.** Dispositif (100) comprenant des moyens pour effectuer les étapes de procédé selon l'une quelconques des revendications 1 à 8.

**12.** Dispositif comprenant des moyens pour effectuer les étapes de procédé selon la revendication 9 ou la revendication 10.

**13.** Programme d'ordinateur comprenant un jeu d'instructions stocké dans un moyen lisible par ordinateur, qui lorsqu'il est exécuté par un processeur a pour effet d'effectuer le procédé selon l'une quelconque des revendications 1 à 8 ou 9 à 10.

FIG. 1

EP 2 135 420 B1

200 — GENERATE GTKID

202 — GENERATE RANDOM NUMBER

204 — CREATE INITIATING MESSAGE

206 — RECEIVE RESPONSE MESSAGES

208 — HAVE RESPONSES BEEN RECEIVED FROM THE REQUIRED GROUP MEMBERS?

NO

YES

210 — CALCULATE GTK

FIG. 2A

FIG. 2B

```
200 ── ┌─────────────┐ ◄──────────────────┐
        │  GENERATE   │                    │
        │  GTKID      │                    │
        └─────────────┘                    │
               │                           │
               ▼                           │
202 ── ┌─────────────────┐                 │
        │  GENERATE       │                 │
        │  RANDOM NUMBER  │                 │
        └─────────────────┘                 │
               │                           │
               ▼                           │
204 ── ┌─────────────────┐                 │
        │  CREATE INITIATING│               │
        │  MESSAGE        │                 │
        └─────────────────┘                 │
               │                           │
               ▼                           │
206 ── ┌─────────────────┐                 │
        │  RECEIVE RESPONSE│                │
        │  MESSAGES       │                 │
        └─────────────────┘                 │
               │                           │
               ▼                           │
208 ── ┌─────────────────────┐    NO       │
        │ HAVE RESPONSES BEEN │─────────────┘
        │ RECEIVED FROM THE   │
        │ REQUIRED GROUP      │
        │ MEMBERS?            │
        └─────────────────────┘
               │ YES
        ┌──────┴──────┐
        ▼             ▼
210 ─┌──────────┐  ┌──────────────────┐── 214
     │CALCULATE │  │ BROADCAST A LIST │
     │GTK       │  │ OF RECEIVED RANDOM│
     └──────────┘  │ NUMBERS AND THEIR │
                   │ SENDERS TO THE    │
                   │ GROUP             │
                   └──────────────────┘
```

FIG. 2C

210 — CALCULATE GTK

300 — DETECT A JOINING GROUP MEMBER

302 — REINITIATE HANDSHAKE PROCEDURE? — NO → SEND INFORMATION TO THE GROUP MEMBER TO CALCULATE GTK — 304

YES ↓

200

FIG. 3A

CALCULATE GTK — 210

SEND INFORMATION TO CALCULATE GTK — 310

FIG. 3B

400 — RECEIVE INITIATING MESSAGE

402 — GENERATE RANDOM NUMBER

404 — CREATE AND BROADCAST RESPONSE MESSAGE

406 — RECEIVE OTHER RESPONSE MESSAGES

408 — HAVE RESPONSES BEEN RECEIVED FROM THE REQUIRED GROUP MEMBERS?

NO → 412 EXECUTE A PREDETERMINED ACTION

YES ↓

410 — CALCULATE GTK

FIG. 4A

420 — RECEIVE INITIATING MESSAGE

422 — RECEIVE RESPONSE MESSAGES

424 — HAVE RESPONSES BEEN RECEIVED FROM THE REQUIRED GROUP MEMBERS?

NO → 428 EXECUTE A PREDETERMINED ACTION

YES ↓

426 — CALCULATE GTK

FIG. 4B

440 — RECEIVE INITIATING MESSAGE

442 — GENERATE RANDOM NUMBER

444 — CREATE AND BROADCAST RESPONSE MESSAGE

446 — RECEIVE OTHER RESPONSE MESSAGES

448 — RECEIVE A LIST IN A BROADCAST MESSAGE FROM HANDSHAKE INITIATOR

450 — COMPARE LIST WITH RANDOM NUMBERS IN RESPONSE MESSAGES

452 — COMPARISON ACCEPTABLE?

NO → 456 EXECUTE A PREDETERMINED ACTION

YES ↓

454 — CALCULATE GTK

FIG. 4C

460 — RECEIVE INITIATING MESSAGE

462 — RECEIVE RESPONSE MESSAGES

464 — RECEIVE A LIST IN A BROADCAST MESSAGE FROM HANDSHAKE INITIATOR

466 — COMPARE LIST WITH RANDOM NUMBERS IN RESPONSE MESSAGES

468 — COMPARISON ACCEPTABLE? —NO→ 472 EXECUTE A PREDETERMINED ACTION

YES ↓

470 — CALCULATE GTK

FIG. 4D

480 — RECEIVE A BROADCAST COMPRISING A LIST OF RANDOM NUMBERS

482 — CALCULATE GTK

FIG. 4E

FROM UPPER
LAYERS

TO UPPER
LAYERS

GROUP-SPECIFIC
INFORMATION —508

DATA LINK LAYER

500

PROGRAM
LOGIC

GTKID
GENERATOR —502

RAND
GENERATOR —504

GROUP
TEMPORAL KEY
GENERATOR —506

TO PHYSICAL
LAYER

FROM PHYSICAL
LAYER

510

FIG. 5A

UPPER LAYER(S)

520

PROGRAM LOGIC

GROUP-SPECIFIC INFORMATION ─528

GTKID GENERATOR ─522

RAND GENERATOR ─524

GROUP TEMPORAL KEY GENERATOR ─526

530

TO DATA LINK LAYER    FROM DATA LINK LAYER

DATA LINK LAYER

GROUP TEMPORAL KEY ─534

532

FIG. 5B

FROM UPPER
LAYERS

TO UPPER
LAYERS

GROUP-SPECIFIC
INFORMATION ──606

DATA LINK LAYER

600

PROGRAM
LOGIC

RAND
GENERATOR ──602

GROUP
TEMPORAL KEY ──604
GENERATOR

TO PHYSICAL
LAYER

FROM PHYSICAL
LAYER

608

FIG. 6A

FIG. 6B